# EUROPÄISCHE PATENTANMELDUNG

(11) **EP 4 290 318 A1**
(43) Veröffentlichungstag der Anmeldung: **13.12.2023**
(21) Anmeldenummer: 22178322.8
(22) Anmeldetag: 10.06.2022
(51) Int. Cl.: G05B 13/04, B31F 1/28

(54) **VERFAHREN ZUR DYNAMISCHEN PROZESSSTEUERUNG EINER WELLPAPPENANLAGE, WELLPAPPENANLAGE, RECHNEREINHEIT UND COMPUTERPROGRAMMPRODUKT**

(71) Anmelder: BHS Corrugated Maschinen- und Anlagenbau GmbH, 92729 Weiherhammer (DE)
(72) Erfinder: Rauscher, Maximilian, 92249 Vilseck (DE)
(74) Vertreter: FDST Patentanwälte

(57) **Zusammenfassung**

Die zugrundeliegende Erfindung betrifft insbesondere ein Verfahren zur dynamischen Prozesssteuerung einer Wellpappenanlage (1) zur Herstellung von Wellpappe (2) einer Endproduktkonfiguration aus mehreren Ausgangsprodukten. Das Verfahren umfasst ein Bereitstellen (202) mehrerer die Endproduktkonfiguration charakterisierender erster Parameterwerte (203), ein Erfassen (205) von mehreren, eine Ausgangsproduktkonfiguration der Ausgangsprodukte (3, 4, 5) charakterisierenden zweiten Parameterwerten (205), und ein Erfassen (206) von mehreren, den Anlagenzustand der Wellpappenanlage (1) charakterisierenden Anlagenparameterwerte (207). Bei dem Verfahren wird ein Prozessparameterdatensatz (209) ermittelt basierend auf einem mathematischen Modell (M) mit den ersten und zweiten Parameterwerten (203, 205) und den Anlagenparameterwerten (207) als Eingangsdaten. Das Verfahren umfasst ferner ein Simulieren (210) eines oder mehrerer, das Endprodukt charakterisierender Qualitätsabbilder (211) basierend auf einem mathematischen Herstellungsalgorithmus (H) bei dem als Eingangsdaten Prozessparameter des Prozessparameterdatensatzes (209) verwendet werden. Erfüllt ein simuliertes Qualitätsabbild (211) die Zielqualitätsanforderungen, so wird der bei der Simulation verwendete Prozessparameterdatensatz zum Betrieb der Wellpappenanlage (1) bei der Herstellung der Wellpappe (2) bereitgestellt bzw. verwendet.

## Beschreibung

Die Anforderungen, die an Wellpappe als Verpackungsmaterial bzw. an eine daraus hergestellte Verpackung hinsichtlich einer optimalen Lösung des jeweiligen Verpackungsproblems als solches gestellt werden, wachsen kontinuierlich weiter. Insbesondere wirken sich die Anforderungen zur Herstellung von Wellpappe in Bezug auf eine konkrete Anwendung z.B. mit vorgegebener Zielgröße und vorgegebener Zielqualität, und ggf. unter Berücksichtigung der Energieeffizienz und Verschnittmenge, auf die Komplexität der Wellpappen- und Verpackungsherstellung aus. Wellpappen können z.B. aus einer Vielzahl von Schichten aufgebaut sein, um die geforderten Eigenschaften für das jeweils zu Grunde liegende Verpackungsproblem zu lösen. Dabei wird vermehrt auch auf einen sich stetig vergrößernden Pool von Ausgangsmaterialien zurückgegriffen.

Gleichzeitig ist es oftmals wünschenswert, im Sinne einer möglichst effizienten Verpackung, eine Überdimensionierung von Verpackungen zu vermeiden. Auch ist es für eine effiziente Herstellung von Bedeutung, dass die Wellpappe bzw. die daraus resultierende Verpackung über ein ganzes Los hinweg präzise und unter Einhaltung vergleichsweise enger Grenzwerte hergestellt werden.

Seitens des Wellpappenherstellers ist es wegen oftmals geforderter Qualitätsgarantien ferner wünschenswert, dass die hergestellte Wellpappe über ein ganzes Los hinweg im Ergebnis in nahezu identischer Qualität hergestellt werden kann, vorzugsweise zumindest weitestgehend unabhängig von den innerhalb gewisser Grenzen variierenden Qualitäten und Eigenschaften der jeweils verwendeten Ausgangsmaterialien wie Papier und Leim, des Anlagenzustandes und ggf. der Anlagenkonfiguration. Vorteilhaft wäre es insoweit, wenn die Wellpappe zumindest innerhalb gewisser Grenzen im Wesentlichen unabhängig von den bei der Herstellung vorliegenden Rahmen- bzw. Eingangsparametern unter Einhaltung der geforderten Verpackungseigenschaften und Verpackungsqualitäten hergestellt werden könnte. Dabei stellt sich jedoch das Problem, dass unterschiedliche Rahmen- und Eingangsparameter die Zielqualität und die Zieleigenschaften des Verpackungsmaterials nicht unerheblich beeinflussen können, wobei die jeweiligen Rahmen- und Eingangsparameter sich auch gegenseitig beeinflussen können.

Unterschiede in der Zielqualität können insbesondere resultieren aus der Verwendung unterschiedlicher Ausgangsmaterialien mit unterschiedlichen Eigenschaften, wie z.B. Feuchte, Dicke, Grammatur, Faserbeschaffenheit des Papiers etc.. Ausgangsmaterial für die Wellpappenherstellung ist Wellpappenrohpapier. Je nach Aufgabenstellung steht ein breites Sortenspektrum mit unterschiedlichen physikalischen und optischen Eigenschaften zur Auswahl. Je nach eingesetzter Papiersorte, Flächengewicht und Aufbau bzw. Zielstruktur der Wellpappe entstehen Wellpappensorten definierter Festigkeit. Ein weiteres Kriterium können Anforderungen an Bedruckbarkeit der Verpackung bzw. der Oberfläche der Wellpappe darstellen.

Die Herstellung der Wellpappe erfolgt in einer sog. Wellpappenanlage. Zur Herstellung der Wellenschicht der Wellpappe wird Papier erwärmt und befeuchtet, um die erforderliche Elastizität zur Umformung zu erhalten. Das so vorbehandelte Papier wird dann unter Druck- und Hitzeeinwirkung zwischen zahnradartig ineinandergreifenden Riffelwalzen hindurchgeführt und gewellt. Zur Ausbildung unterschiedlicher Wellenformen (Wellenhöhe, Wellenbreite) können Riffelwalzen unterschiedlicher Riffelung verwendet werden. Das gewellte Papier wird dann mit Leim mit einer Deckenbahn verleimt. Bei der Herstellung einer einwelligen, einseitigen Wellpappe wird lediglich eine Deckenbahn auf eine Wellenschicht aufgeleimt. Bei einwelliger, zweiseitiger Wellpappe werden zwei Deckbahnen auf eine Wellenschicht aufgeleimt. Andere Konfigurationen mit weiteren gewellten und glatten Papierbahnen (mehrwellige Wellpappe) sind ebenfalls möglich.

Üblicherweise durchlaufen die fertigen Wellpappenbahnen in der Wellpappenmaschine einen Zuschnitt und werden dabei auf die gewünschten Formate zugeschnitten. Je nach Zieleigenschaften können weitere Bearbeitungsschritte folgen, z.B. Rillen (für Faltverpackungen), Bedrucken, Imprägnieren, Beschichten, usw..

Die Verwender von Wellpappenverpackungen müssen sich auf eine im Wesentlich gleichbleibende Qualität der jeweils bestellten Wellpappsorte verlassen können, so dass die Anforderungen für den Schutz vor Transport- und Lagerbeanspruchungen der verpackten Waren/Güter erfüllt werden können. Bei Wellpappen gibt es definierte Standardqualitäten bzw. Standardsorten mit definierten Eigenschaften und Festigkeitswerten, die dem Verwender der Wellpappe die Bestellung und Eingangskontrolle vereinfachen.

Auf Grund der Vielzahl an miteinander wechselwirkenden Einflussfaktoren, welche die Qualität und Eigenschaften der Wellpappe beeinflussen, und der Tatsache, dass die Verwender der Wellpappe definierte Eigenschaften fordern, wäre es für Betreiber von Wellpappenanlagen wünschenswert, eine Methode an der Hand zu haben, mit der jeweils gewünschte Zielqualitäten und Zieleigenschaften der Wellpappe - zumindest innerhalb gewisser Grenzen - auch bei variierenden Eigenschaften der Ausgangsmaterialien und/oder des Zustands der Wellpappenanlage erreicht werden können.

Mithin kann es als eine Aufgabe der Erfindung angesehen werden, ein Verfahren bereitzustellen, das es ermöglicht, eine Wellpappenanlage so zu betreiben, dass gewünschte Zielqualitäten und Zieleigenschaften der Wellpappe - zumindest innerhalb gewisser Grenzen - auch bei variierenden Rahmenbedingungen, wie z.B. Rohstoffqualität, Rohstoffeigenschaften, Anlageneigenschaften usw., erreicht werden können. Weiterhin sollen eine entsprechend betreibbare Wellpappenanlage, sowie eine Rechnereinheit und ein Computerprogrammprodukt zum Betrieb einer Wellpappenanlage bereitgestellt werden.

Diese Aufgabe wird erfindungsgemäß gelöst durch die Merkmale der unabhängigen Ansprüche. Ausgestaltungen der Erfindung ergeben sich aus nebengeordneten und abhängigen Ansprüchen sowie aus den beispielhaften Ausgestaltungen der nachfolgenden Beschreibung.

Nach einer Ausgestaltung ist ein Verfahren zur dynamischen Prozesssteuerung einer Wellpappenanlage, insbesondere zur prädiktiv dynamischen Prozesssteuerung einer Wellpappenanlage, vorgesehen.

Das Verfahren ist insbesondere computer-implementiert, so dass der Herstellungsprozess im Wesentlichen automatisiert, z.B. gesteuert durch eine Rechnereinheit, durchgeführt werden kann.

Die Wellpappenanlage ist zur Herstellung von Wellpappe einer Endproduktkonfiguration aus mehreren Ausgangsprodukten eingerichtet.

Als Ausgangsprodukte zur Herstellung der Wellpappe zählen z.B. die Grundstoffe Klebstoff bzw. Leim, und Papier. Beispielsweise kann die Wellpappe aus bis zu sieben oder mehr Papierbahnen hergestellt werden, wobei die Papierbahnen mittels eines z.B. stärkebasierten Klebstoffs verklebt werden.

Unter dem Begriff "dynamische Prozesssteuerung" soll insbesondere verstanden werden, dass anlageneigene und/oder anlagenfremde, variierende Parameter in die zu Grunde liegende Steuerung der Wellpappenanlage einfließen, bzw. von dieser berücksichtigt werden/können. Anlageneigene Parameter sind dabei solche, die sich durch die Anlagenkonfiguration und die Konfiguration der Anlagenbestandteile ergeben, z.B. Abnutzung, Lagerspiel usw.. Anlagenfremde Parameter sind solche, die nicht durch die Anlage als solche, sondern durch Randbedingungen der Produktion gegeben sind, wie z.B. Umgebungsparameter wie Temperatur, Luftfeuchte, sowie Eigenschaften der Ausgangsstoffe und/oder Ausgangshalbzeuge und/oder Ausgangsprodukte zur Herstellung der Wellpappe usw.. Sowohl anlageneigene und anlagenfremde Parameter bzw. Produktionsparameter sind, wie eingangs erwähnt, nicht zwingend gleichbleibend, sondern können zeitlich variieren.

Unter dem Begriff "prädiktiv dynamische Prozesssteuerung" soll insbesondere verstanden werden, dass die dynamische Prozesssteuerung ausgerichtet ist auf das unter Berücksichtigung der vorweg beschriebenen Parameter zu erreichende Produktionsergebnis. Dabei zielt das zu erreichende bzw. das jeweils gewünschte Produktionsergebnis ab. Da das tatsächliche Produktionsergebnis, insbesondere die Produktqualität, erst nach der Herstellung tatsächlich bestimmbar ist, zielt die prädiktive dynamische Prozesssteuerung darauf ab, auch bei variierenden Parametern ein Produktionsergebnis zu erhalten, das zumindest in einem vorgegebenen Zielkorridor liegt. Das Verfahren zur dynamischen Prozesssteuerung umfasst insbesondere die nachfolgenden folgenden Schritte a) bis h).
a) Bereitstellen mehrerer die Endproduktkonfiguration charakterisierender erster Parameterwerte.

Das Bereitstellen der ersten Parameterwerte kann z.B. für zumindest einen, vorzugsweise für alle ersten Parameterwerte eine Ermittlung, eine Abfrage, ein Einlesen, ein Auslesen aus einer Datenbank oder von einem Datenträger usw. umfassen. Die ersten Parameterwerte können beispielsweise in Form eines Datensatzes, insbesondere in Form eines digitalen Zielabbildes der herzustellenden Wellpappe, vorliegen, z.B. für die Herstellung eines Fertigungsloses. Die ersten Parameterwerte können sich beispielsweise beziehen auf die Ebenheit des Wellpappbogens (Planlage), Struktur, insbesondere Oberflächenstruktur, die Qualität, Festigkeit, Bedruckbarkeit der Oberfläche usw..
b) Erfassen von mehreren, eine Ausgangsproduktkonfiguration der Ausgangsprodukte charakterisierenden zweiten Parameterwerten.

Das Erfassen der zweiten Parameterwerte kann beispielsweise die unmittelbare Erfassung mittels Sensoren und/oder ein Einlesen oder eine Eingabe über eine Schnittstelle, z.B. eine Datenschnittstelle und/oder eine Benutzerschnittstelle umfassen. Fernern kann das Erfassen ein Auslesen/Abrufen/Abfragen aus einer Datenbank oder von einem Datenträger umfassen. Mithin umfasst der Begriff "Erfassen" insbesondere eine Bereitstellung, Zurverfügungstellung und/oder Ermittlung der Parameterwerte bei der das Verfahren durchführenden Einheit, z.B. eine Rechnereinheit mit z.B. einen oder mehreren Prozessoren und/oder Rechen-, Steuer- und/oder Reglungseinheiten.

Bei den zweiten Parameterwerten kann es sich z.B. um die Feuchte, die Art, die Grammatur usw. des zur Verfügung stehenden bzw. zur Verwendung beabsichtigten Papiers handeln. Ferner kann es sich um die Art des zur Verfügung stehenden bzw. des zur Verwendung beabsichtigten Leims usw. handeln.
c) Erfassen von mehreren, den Anlagenzustand der Wellpappenanlage charakterisierenden Anlagenparameterwerte.

Zum Begriff Erfassen gilt das für Schritt b) diskutierte. Insbesondere kann das Erfassen eine Ermittlung mittels Sensoren, ein Einlesen, ein Auslesen/Abrufen/Abfragen aus einer Datenbank oder von einem Datenträger umfassen. Mithin umfasst der Begriff "Erfassen" insbesondere eine Bereitstellung, Zurverfügungstellung und/oder Ermittlung der Anlagenparameterwerte bei der das Verfahren durchführenden Einheit.

Bei den Anlagenparameterwerten kann es sich beispielsweise um die Anlagenkonfiguration, d.h. die Konfiguration der Wellpappenanlage oder Teile derselben, handeln. Die Anlagenkonfiguration kann z.B. allgemeine Konfigurationsdaten zur Anzahl und Art an einseitigen Maschinen, Anzahl und Art an Prozessstufen bzw. Prozessketten der Anlage, usw. umfassen, und spezifische Konfigurationsdaten zu Wellengeometrien bzw. Riffelgeometrien der verwendeten Walzen zur Herstellung der Wellenschicht/en, Leimauftragswerk, und/oder zum Verschleißzustand von Anlagekomponenten, z.B. Verschleißzustand von Riffelwalzen, Wellen, Walzenlager, (lokale) Anlagentemperatur usw..
d) Ermitteln eines, d.h. zumindest eines, Prozessparameterdatensatzes basierend auf einem mathematischen Modell, wobei die ersten und zweiten Parameterwerte und die Anlagenparameterwerte als Eingangsdaten für das mathematische Modell verwendet werden, und das mathematische Modell eine Abbildung der Eingangsdaten auf mehrere Prozessbeschränkungen für variable Prozessparameter der Wellpappenanlage beschreibt.

Das Begriff Ermitteln kann insbesondere ein Berechnen, insbesondere eine rechnergestützte Berechnung, Ableitung usw. umfassen. Jedenfalls wird der Prozessparameterdatensatz auf Grundlage des mathematischen Modells erstellt. Der ermittelte Prozessparameterdatensatz kann sämtliche oder einen Teil der (einstellbaren bzw. veränderbaren) Betriebsparameter der Wellpappenanlage, d.h. die Anlageneinstellungen, umfassen. Unter den Prozessbeschränkungen können insbesondere die möglichen (technischen) Einstellungen der Wellpappenanlage verstanden werden, wie z.B. Papiervorschub, Anpressdruck von Walzen, Leimzufuhr, Temperierung usw., die jeweils z.B. in einem gewissen Rahmen veränderbar sein können.

Das mathematische Modell stellt prozesstechnisch eine Verbindung zwischen Ausgangsparametern (zweite Parameterwerte) und Zielparameterwerten (erste Parameterwerte) her. Das mathematische Modell kann z.B. auf empirischen Daten, auf bekannten Produktionsdaten, und/oder auf Daten aus technischer Prozessoptimierung für die jeweils verwendete Wellpappenanlage und/oder deren Komponenten basieren. Als Beispiel für ein solches Modell kann die Berechnung des wellpappenspezifischen Kantenstauchwiderstandes (engl.: Edge Crush Resistance) z.B. nach Empa/Markström genannt werden. In diesem Modell wird die Kantenstauchbelastung des Wellpappenbogens basierend auf Papierfestigkeiten berechnet.

Bei dem mathematischen Modell kann es sich insbesondere um ein dynamisches Modell handeln, das auf Grundlage laufender und vergangener Prozessparameter angepasst, insbesondere optimiert wird. Zur Anpassung bzw. Optimierung können beispielsweise neuronale Netze verwendet werden.
e) Simulieren eines oder mehrerer, das Endprodukt charakterisierender Qualitätsabbilder basierend auf einem, den Herstellungsprozess der Wellpappenanlage beschreibenden mathematischen Herstellungsalgorithmus, wobei als Eingangsdaten für den Herstellungsalgorithmus innerhalb der Prozessbeschränkungen gelegene, (insbesondere variable) Prozessparameter des Prozessparameterdatensatzes verwendet werden.

Als Beispiel für einen Herstellungsalgorithmus kann die geschwindigkeitsbasierende Steuerung der Heiztrommelumschligungsposition, bzw. der Umschlingung einer Heiztrommel der Wellpappenanlage, genannt werden. Beispielsweise kann ein entsprechender Herstellungsalgorithmus einen funktionalen, z.B. linearen, Zusammenhang zwischen der Anlagengeschwindigkeit (oder der Geschwindigkeit der Wellpappe in Meter/Minute) und der Heiztrommelumschlingung (z.B. in %) umfassen. Ein weiterer Herstellungsalgorithmus bzw. eine weitere Komponente eines solchen Algorithmus kann ist z.B. das Einstellen von Prozessparametern betreffen, wie beispielsweise eine geschwindigkeitsbasierte Steuerung des Leimauftrags.

Das bedeutet, dass Prozessparameter des im Schritt d) ermittelten Prozessparametersatzes als Eingangsdaten für den Herstellungsalgorithmus verwendet werden. Der Herstellungsalgorithmus entspricht einem (mathemaischen) Modell, das die Prozessparameter, und ggf. die zweiten Parameterwerte und Anlagenparameterwerte, auf ein resultierendes Wellpappenprodukt abbildet. Dabei werden bei dem Modell konkret die Herstellung und der Betrieb der Anlage modelliert.

Insbesondere werden im Schritt d) mögliche Prozessparameter ermittelt, die nach dem mathematischen Modell bei entsprechendem Betrieb der Wellpappenanlage zur Endproduktkonfiguration führen. Diese Prozessparameter wiederum bilden die Grundlage für die Simulation, d.h. eine Vorhersage der voraussichtlich erreichbaren Produktkonfiguration (Qualitätsabbild).

Bei den Qualitätsabbildern kann es sich um pixel- oder voxelbasierte Bilder oder Bildausschnitte handeln, die jeweils ein Flächen- oder Volumenelement des Endprodukts definieren. Im Allgemeinen können die Qualitätsabbilder jedoch beliebige Daten(sätze) zur Charakterisierung der Qualität (Feuchte, Oberflächenstruktur, Grammatur, Bedruckbarkeit usw.) des Endprodukts sein. Beispielsweise können solche Daten mehrdimensionale (Daten-)Vektoren umfassen. Durch solche Vektoren können insbesondere komplexe Zusammenhänge beschrieben werden.

Nach Simulation des Endprodukts im Schritt e) folgt ein Vergleichsschritt:
f) Vergleichen des simulierten Qualitätsabbilds mit einem hinterlegten digitalen Zielabbild.

Das digitale Zielabbild kann beispielsweise im gleichen Format wie das simulierte Qualitätsabbild vorliegen, z.B. als pixel- oder voxelbasiertes Bild und/oder als Vektordatensatz mit Komponenten, welche die Qualität des gewünschten Endprodukts definieren, beispielsweise basierend bzw. korrespondierend zu den ersten Parameterwerten. Das Zielabbild kann z.B. auf einem Datenträger oder in einer Datenbank vorgehalten werden. Das Zielabbild kann insbesondere auf Vorgaben eines Auftraggebers oder Abnehmers der Wellpappe beruhen. Die genannten Datenformen, z.B. Vektoren, ermöglichen einen vergleichsweise einfachen Vergleich.

Durch den Vergleich im Schritt f) ist es möglich, zu entscheiden, ob der ermittelte Prozessparameterdatensatz für eine Herstellung von Wellpappe in der gewünschten Zielqualität voraussichtlich ausreicht. Ist das nicht der Fall, kann das Verfahren den nachfolgend beschriebenen Schritt g) umfassen, der insbesondere iterativ ausgeführt werden kann, z.B. bis ein Abbruchkriterium erfüllt ist. Das Abbruchkriterium kann beispielsweise ein Beenden des Verfahrens, insbesondere der Iteration, bewirken, wenn kein Prozessparameterdatensatz ermittelt werden kann, der eine Herstellung der Wellpappe mit der gewünschten Zielqualität bzw. im gewünschten Zielhorizont/Zielintervall ermöglicht. Das Abbruchkriterium kann auch dahingehend ausgebildet sein, dass das Verfahren, insbesondere die Iteration, dann beendet wird, wenn ein Prozessparameterdatensatz ermittelt wurde, der eine Herstellung von Wellpappe mit der gewünschten Zielqualität bzw. im gewünschten Zielhorizont/Zielintervall ermöglicht.
g) Wiederholden der Simulation nach Schritt e), insbesondere iterativ, jeweils unter Variation der (variablen) Prozessparameter innerhalb der Prozessbeschränkungen, falls sich bei dem vorausgehenden Vergleich gemäß Schritt f) herausstellt, dass sich das simulierte Qualitätsabbild mehr als eine vorgegebene Schwellwertqualität vom Zielabbild unterscheidet.

Das bedeutet, dass die Schritte e) Simulieren und d) Vergleichen ggf. mehrmals nacheinander ausgeführt werden können, z.B. bis ein Prozessparameterdatensatz vorliegt, der eine Herstellung in der Zielqualität ermöglicht. Die Zielqualität kann z.B. durch ein oder mehrere Zielparameter mit zugeordnetem Toleranzbereich definiert sein. Liegen die Produktparameter der simulierten Qualitätsabbilder im Toleranzbereich der Zielparameter, so kann der korrespondierend dazu ermittelte Prozessparameterdatensatz zur Einstellung der Wellpappenmaschine und bei deren Herstellung verwendet werden.

Insbesondere können bei dem Verfahren eine Vielzahl an Qualitätsabbildern ermittelt werden, beispielsweise unter Variation der Prozessparameter. Aus der Vielzahl der Qualitätsabbilder kann ein zugeordneter Prozessparameterdatensatz für die Produktion ausgewählt werden, für welchen die Abweichungen zum Zielabbild minimal sind. Insoweit können insbesondere die Schritte e) und f) im Rahmen einer Optimierungsaufgabe für den Prozessparameterdatensatz wiederholt ausgeführt werden. Bei der Optimierungsaufgabe unter Variation der Prozessparameter kann also ein optimaler Prozessparameterdatensatz ermittelt werden, bei dem die Abweichungen zum Zielabbild z.B. minimal ist.

Der aus ggf. wiederholter Simulation ermittelte Prozessparametersatz kann dann zum Betrieb der Wellpappenanlage verwendet werden. Entsprechend kann das Verfahren den folgenden Schritt umfassen.
h) Ermitteln der bei der Simulation verwendeten Prozessparameter, falls sich beim Vergleichen gemäß Schritt f) herausstellt, dass das simulierte Qualitätsabbild weniger als die vorgegebene Schwellwertqualität vom Zielabbild abweicht, und Bereitstellen der ermittelten Prozessparameter als ein Prozessparameterdatensatz zum Betrieb der Wellpappenanlage bei der Herstellung der Wellpappe.

Die Schwellwertqualität kann beispielsweise durch das mit einem Toleranzbereich für jeweilige Zielparameter des Zielabbilds gegeben sein. Der Prozessparameterdatensatz kann z.B. Maschinensteuerbefehle umfassen, die beispielsweise zur maschinenseitigen Einstellung und Umsetzung von Prozessparametern durch eine Steuerung oder Regelung zum Betrieb der Wellpappenanlage verwendet werden können.

Mit dem beschriebenen Verfahren können mehrere Vorteile erreicht werden. Einerseits ist es möglich, die jeweils gewünschte Zielqualität ohne aufwändige Testläufe zu erreichen. Dadurch kann insbesondere die für die Produktion von Wellpappe in Zielqualität verfügbare Produktionszeit bzw. Maschinenlaufzeit verlängert werden, wobei gleichzeitig auch der ansonsten durch Testläufe anfallende Ausschuss verringert werden kann. Auch ist eine Optimierung der Produktionszeit dahingehend möglich, dass die Prozessparameter bereits im Vorfeld, z.B. während des laufenden Betriebs, ermittelt werden können.

Davon abgesehen ist das vorgeschlagene Verfahren auch möglich zur Optimierung bzw. Anpassung der laufenden Herstellung von Wellpappe einer Zielqualität. Dazu kann beispielsweise die tatsächlich erreichte Produktkonfiguration der hergestellten Wellpappe ermittelt und mit der jeweils zu Grunde liegenden Zielproduktkonfiguration verglichen werden. Werden beispielsweise systematische Abweichungen festgestellt, z.B. größer werdende Abweichungen von der Zielqualität, so kann dies als ein Hinweis gesehen werden, dass sich die Ausgangsproduktkonfiguration der Ausgangsprodukte und/oder die Anlagenparameterwerte geändert haben. Entsprechende Werte können z.B. mittels Sensoren ermittelt bzw. überwacht, insbesondere kontinuierlich ermittelt, und/oder durch einen Benutzer eingegeben werden.

Werden entsprechende Abweichungen festgestellt kann entweder die der Betrieb der Wellpappenmaschine unterbrochen werden, oder es kann mittels des Verfahrens unter Verwendung der veränderten Ausgangskonfiguration und/oder Anlagenparameterwerte ein neuer Prozessparameterdatensatz ermittelt werden, mit angepassten Betriebs- und/oder Prozessparametern zur Erreichung der Zielqualität. Dieser neue Prozessparameterdatensatz kann dann zum Betrieb der Wellpappenanlage verwendet werden.

Möglich ist es im Rahmen des vorgeschlagenen Verfahrens insbesondere auch, dass die zweiten Parameterwerte und/oder die Anlagenparameterwerte zumindest teilweise während der Herstellung der Wellpappe ermittelt, insbesondere überwacht werden. Ergibt sich aus der Überwachung eine Abweichung eines oder mehrerer der Werte, z.B. um mehr als eine jeweilige Toleranzschwanke, so kann auf Grundlage der festgestellten Abweichung unter Anwendung des Verfahrens ein neuer Prozessparameterdatensatz ermittelt werden. Auf diese Weise ist es insbesondere möglich, die gewünschte Zielqualität im Wesentlichen zu erreichen. Der Begriff "im Wesentlichen erreichen" soll bedeuten, eine Neuermittlung bzw. Neuberechnung eines Prozessparameterdatensatzes ggf. nicht in allen Fällen möglich ist. Beruht die Abweichung beispielsweise auf einer Veränderung eines Ausgangsprodukts und/oder der Wellpappenmaschine mit welcher die Zielqualität jedenfalls mit Wahrscheinlichkeit sicher nicht mehr erreicht werden kann, so kann sich aus dem Verfahren ergeben, dass die laufende Produktion zu stoppen ist. Die genannten Veränderungen können z.B. durch Schäden an der Wellpappenanlage, z.B. Lagerschäden, Bruch mechanischer Elemente, Ausfall von Motoren usw. und/oder unüblichen Qualitätsschwankungen bei den Ausgangsprodukten hervorgerufen werden.

Die obigen Ausführungen zeigen insbesondere, dass das vorgeschlagene Verfahren vorteilhafte technische Wirkungen beim Betrieb einer Wellpappenanlage und der Herstellung von Wellpappe erzeugt. Insbesondere werden die technische Konfiguration der Wellpappenanlage und die Qualität der Ausgangsprodukte, d.h. konkrete physikalische und technische Parameter, für die Einstellung und den Betrieb der Wellpappenanlage verwendet.

Nach einer Ausgestaltung kann das mathematische Modell und/oder der Herstellungsalgorithmus auf Methoden der Mustererkennung, auf Methoden der Fuzzy-Logik und/oder auf Methoden der neuronalen Netzwerke beruhen. Entsprechende Methoden sind insbesondere dazu geeignet, aus einer Vielzahl an Eingangsparametern, wie z.B. der ersten und zweiten Parameterwerte und die Anlagenparameterwerte, z.B. gewichtet oder ungewichtet oder beliebiger Beziehung zueinander, zu verarbeiten. Auch ermöglichen solche Methoden eine Berücksichtigung der Relevanz der jeweiligen Parameter für die Zielqualität der Wellpappe bzw. die Outputqualität der Wellpappenanlage.

Als Beispiel für entsprechende Methoden kann die Nutzung der Papierfaserausrichtung aufgeführt werden, die z.B. bereits bei der Papierherstellung gemessen, und dem Verfahren in Form der zweiten Parameterwerte bereitgestellt werden kann. Es ist bekannt, dass sog. Linerpapierbahnen bei Paarung mit gegensinniger Faserorientierung einen Einfluss auf die Planlage/Ebenheit der fertigen Wellpappe haben. Konkret bedeutet es, dass bei einer einwelligen Wellpappe, bestehend aus glatter Außenbahn, geriffelter Wellbahn und glatter Innenbahn eine Qualitätsminderung des Produktes auftreten kann wenn die beiden glatten Bahnen mit ungünstiger Faserorientierung gepaart werden.

Durch geeignete Paarung von Papieren mit gewissen gegebenen Faserorientierungen kann das Papier so kombiniert werden, dass die Outputqualität des Produktes gewährleistet ist, sprich, dass die negativen Effekte einer falschen Paarung vermieden werden. Entsprechende Kombinationen bzw. Optimierungen sind z.B. durch Verwendung der beschriebenen Methoden vergleichsweise einfach umsetzbar, denn z.B. kann die Wellpappenmaschine so betrieben und gerüstet werden, dass die bevorzugte Kombination der Faserorientierungen umgesetzt ist.

Entsprechendes gilt für den Herstellungsalgorithmus der beispielsweise und insbesondere auf Methoden der Fuzzy-Logik und/oder auf Methoden der neuronalen Netzwerke beruhen kann.

Nach einer Ausgestaltung werden für das bzw. bei dem Verfahren mehrere mathematische Methoden und/oder Herstellungsalgorithmen bereitgestellt. Entsprechende Methoden/Herstellungsalgorithmen können in Abhängigkeit der Endproduktkonfiguration ausgewählt werden oder können als auswählbar bereitgestellt werden. Eine Auswahl kann z.B. durch eine das Verfahren ausführende Rechnereinheit und/oder durch einen Benutzer erfolgen. Beispielsweise kann die Methode/der Herstellungsalgorithmus in Abhängigkeit der Endproduktkonfiguration bzw. der herzustellenden Wellpappe, z.B. einwellig vs. mehrwellig bzw. einseitig vs. zweiseitig, (automatisch) ausgewählt werden. Möglich ist auch, dass eine das Verfahren ausführende Rechnereinheit (Steuerung) eine Methode/einen Herstellungsalgorithmus zur Bestätigung durch einen Benutzer vorschlägt.

In einer Ausgestaltung können, wie bereits angedeutet, die Schritte a) bis h), oder insbesondere die Schritte d) bis f), während des Betriebs der Wellpappenanlage bei der Herstellung von Wellpappe wiederholt ausgeführt werden. Auf diese Weise können während der laufenden Herstellung die Prozessparameter, insbesondere kontinuierlich, optimiert werden. Insbesondere können die zum Betrieb der Wellpappenanlage verwendeten Prozessparameter basierend auf der wiederholten Ausführung dynamisch angepasst werden. Damit liegt ein Vorteil des vorgeschlagenen Verfahrens nicht nur in der Möglichkeit der anfänglichen technischen Einrichtung der Wellpappenanlage, sondern auch zur Optimierung und Anpassung des Betriebs während der Herstellung zur Erreichung einer jeweils gewünschten Zielqualität.

Nach einer Ausgestaltung können die ersten Parameterwerte, die zweiten Parameterwerte und/oder die Anlagenparameterwerte durch Sensoren erfasst werden. Möglich ist auch, dass diese aus einer korrespondierenden Datenbank, die z.B. auf einem elektronischen Speicher und/oder einem Datenträger gespeichert ist, ausgelesen werden und/oder von einem Benutzer über eine Benutzerschnittstelle abgefragt werden.

Bei der Datenbank kann es sich eine der Wellpappenanlage zugeordnete lokale Datenbank, und/oder über eine Remotedatenbank handeln, die z.B. über ein Datennetzwerk mit der Rechnereinheit z.B. Steuerung) zur Durchführung des Verfahrens verbunden sein kann.

Nach einer Ausgestaltung können die ersten Parameterwerte ausgewählt sein aus der Gruppe umfassend: Struktur, Oberflächenqualität, Festigkeit, Planlage, Verleimung, Faltbarkeit, Verarbeitbarkeit, Energieeffizienz der Herstellung, Verschnittmenge.

Nach einer Ausgestaltung können die zweiten Parameterwerte ausgewählt sein aus der Gruppe umfassend: Papierqualität, Papierfestigkeit, flächenbezogene Masse, Faserorientierung, Feuchtigkeit, Temperierung, Leimart, und Leimqualität.

Nach einer Ausgestaltung können die Anlagenparameterwerte ausgewählt sein aus der Gruppe umfassend: Verschleiß, Umweltbedingungen, Luftfeuchte und Umgebungstemperatur.

Nach einer Ausgestaltung können die (variablen) Prozessparameter ausgewählt sein aus der Gruppe umfassend: Temperatur, Befeuchtung, Bahnpassungen, Anpressdruck oder -drücke, Dampfdruck oder Dampfdrücke.

Nach einer Ausgestaltung kann das Vergleichen gemäß Schritt f) ein Segmentieren der Qualitätsabbilder und ein Vergleichen entsprechender Segmente der Qualitätsabbilder mit dem Zielabbild, insbesondere korrespondierenden Segmenten des Zielabbilds, umfassen. Zur Ermittlung eines Vergleichsergebnisses können für jeweilige Segmente erhaltene Einzelvergleiche bzw. Einzelvergleichsergebnisse unterschiedlich gewichtet werden.

Unter dem Begriff Segmentieren soll insbesondere verstanden werden als ein Zuordnen einer Zielqualität bzw. einer Outputqualität auf den Produktionsprozess mit Rückverfolgung der Zustände von Papier und Wellpappe entlang einer Anlage. Beispielsweise ist es möglich, die Zielqualität bzw. Outputqualität, in Anlagenspezifische Segmente, z.B. Parametersätze, aufzugliedern bzw. zu zerlegen, wobei die anlagenspezifischen Segmente korrespondierenden Abschnitten bzw. Segmenten des Produktionsprozesses und damit verbundenen Zielqualitäten zugeordnet werden können, z.B. Trocknung, Beleimung, Riffelung, Pressung usw.. Durch Vergleich kann mithin ein Maß für die Erreichung der Ziel- bzw. Outputqualität ermittelt werden. Beim Vergleich können, wie bereits beschrieben, unterschiedliche Segmente, z.B. Vergleichsergebnisse für einzelne Segmente, unterschiedlich gewichtet werden.

Unter einem Segment innerhalb einer Wellpappenanlage können dabei insbesondere Anlagenabschnitte mit verschiedenen Papier- bzw. Wellpappbahnen verstanden werden, die bei der Herstellung nacheinander abgerollt, umgeformt, geriffelt und verklebt werden, insbesondere inklusiver aller erforderlichen, zusätzlichen Beheizungen. Beispielsweise kann ein Segment ein einseitiges Material, bestehend aus Wellbahn und Linerbahn, welche zur einseitigen Endlosbahn geformt und geklebt werden, betreffen. Weitere Segmente können z.B. mit dem einseitigen Material zu verbindende weitere Linerbahnen und/oder Wellbahnen betreffen.

Nach einer Ausgestaltung können die ersten Parameterwerte, die zweiten Parameterwerte, die Anlagenparameterwerte und/oder die (variablen) Prozessparameter jeweils klassifiziert sein/werden, und unter Verwendung eines Mustererkennungsalgorithmus jeweils vorgegebenen Klassen von Parameterwerten, Anlagenparameterwerten bzw. Prozessparametern als Eingangsdaten für Schritt d) und/oder e) zugeordnet werden.

Nach einer Ausgestaltung ist eine Rechnereinheit vorgesehen, die zumindest einen Prozessor und zumindest einen Speicher mit darauf gespeicherten Instruktionen umfasst, die bei Ausführung durch den Prozessor ein Verfahren nach einer der hierin beschriebenen Ausgestaltungen bewirkt. Die Rechnereinheit kann zumindest teilweise lokal am Ort der Wellpappenanlage installiert sein. Möglich ist auch, dass die Rechnereinheit zumindest teilweise remote eingerichtet ist.

Nach einer Ausgestaltung kann die Rechnereinheit des Weiteren dazu eingerichtet sein, Anlagensteuerbefehle aus den ermittelten Prozessparametern zu erzeugen. Die Rechnereinheit kann ferner eine Steuerung umfassen, die dazu eingerichtet ist, die Wellpappenanlage bei der Herstellung der Wellpappe entsprechend den Anlagensteuerbefehlen zu steuern.

Nach einer Ausgestaltung ist ein Computerprogrammprodukt vorgesehen, das Instruktionen umfasst, die bei Ausführung durch eine Rechnereinheit oder durch eine Steuerung ein Verfahren nach einer der hierin beschriebenen Ausgestaltungen bewirkt.

Nach einer Ausgestaltung ist eine Wellpappenanlage mit einer Rechnereinheit vorgesehen, welche zur Herstellung von Wellpappe gemäß einem Verfahren zur dynamischen Prozesssteuerung nach einer der hierin beschriebenen Ausgestaltungen eingerichtet sind.

Nach einer Ausgestaltung umfasst die Wellpappenanlage eine Eingabeeinheit oder Eingabeschnittstelle zur Eingabe und/oder zur Auswahl und/oder zum Einlesen der ersten Parameterwerte, der zweiten Parameterwerte, der Anlagenparameterwerte und/oder der variablen Prozessparameter.

Nach einer Ausgestaltung der Wellpappenanlage sind die ersten Parameterwerte, die zweiten Parameterwerte, die Anlagenparameterwerte und/oder die variablen Prozessparameter in einer oder mehreren der Wellpappenanlage zugeordneten Datenbanken abgelegt, und sind für die Durchführung des Verfahrens durch einen Benutzer und/oder durch die Rechnereinheit abrufbar und/oder auswählbar.

Nach einer Ausgestaltung umfasst die Wellpappenanlage einen in der Rechnereinheit implementierten Klassifikator zur Klassifikation der ersten Parameterwerte, der zweiten Parameterwerte, der Anlagenparameterwerde und/oder der (variablen) Prozessparameter, zur Zuordnung der klassifizierten ersten Parameterwerte, der klassifizierten zweiten Parameterwerte, der klassifizierten Anlagenparameterwerde und/oder der klassifizierten (variablen) Prozessparameter, zu vorgegebenen ersten Parametersätzen, zweiten Parametersätzen, Anlagenparametersätzen bzw. Prozessparameterwertesätzen. Die Rechnereinheit ist dazu eingerichtet, die zugeordneten ersten Parametersätze, zweiten Parametersätze, Anlagenparametersätze bzw. Prozessparameterwertesätze als Eingangsdaten bei der Durchführung der Schritte d) und/oder e) zu verwenden. Der Klassifikator kann beispielsweise eine Mustererkennung umfassen, welche eine Zuordnung eines Parameters zu einer vorgegeben Klasse ermöglicht. Mittels des Klassifikators und/oder der Mustererkennung ist es möglich, aus gegebenen Ausgangsdaten, z.B. Auftragsdaten, geeignete Eingabewerte für das Verfahren zu erzeugen. Dabei ist es beispielsweise auf Grund des Klassifikators/der Mustererkennung nicht zwingend erforderlich, dass die Ausgangsdaten bzw. Auftragsdaten in einem gegebenen Format, beispielsweise mit vorgegebener Reihenfolge von Parameterwerten usw. vorliegen. Insbesondere können für das Verfahren erforderliche Parameterwerte und Daten zumindest im Wesentlichen, bzw. zumindest teilweise automatisch erzeugt bzw. erkannt werden. Darauf basierend können auch die Prozessparameterdatensätze entsprechend automatisiert oder teilautomatisiert erzeugt werden. Sollte ein zur Ausführung des Verfahrens erforderlicher Parameter nicht vorliegen oder nicht erkannt werden, kann das Verfahren eine Anfrage zur Ermittlung des fehlenden Parameters erzeugen, beispielsweise gerichtet an einen Benutzer und/oder eine Datenbank oder Datenbasis.

Nach einer Ausgestaltung kann die Wellpappenanlage eine in der Rechnereinheit implementierte Simulationseinheit umfassen, die eingerichtet ist zur Durchführung der Simulation nach Schritt e). Die Simulationseinheit kann beispielsweise vor Ort oder remote ausgebildet sein.

Nach einer Ausgestaltung kann die Wellpappenanlage eine in der Rechnereinheit implementierte Vergleichs- und Auswerteeinheit umfassen, die eingerichtet ist zur Durchführung des Vergleichs nach Schritt f) und zur Auswertung des Vergleichsergebnisses. Die Vergleichs- und Auswerteeinheit kann beispielsweise vor Ort oder remote ausgebildet sein.

### Beschreibung der Figuren

Beispielhafte Ausgestaltungen der Erfindung werden nachfolgend anhand der anhängenden Zeichnungen beschrieben. Es zeigen:
- FIG. 1: schematisch eine Wellpappenanlage; und
- FIG. 2 und 3: ein beispielhaftes Ablaufdiagramm eines Verfahrens zur dynamischen Prozesssteuerung einer Wellpappenanlage.

### Beschreibung beispielhafter Ausgestaltungen

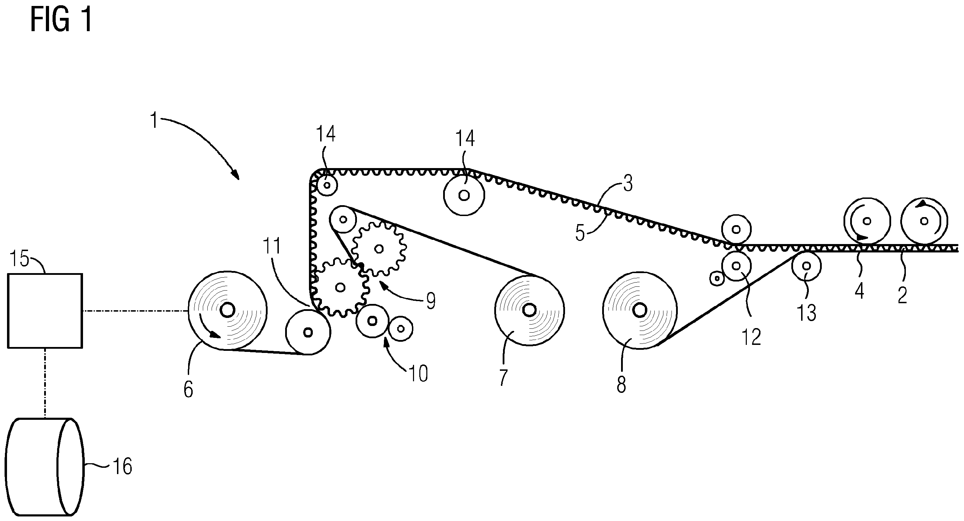

FIG. 1 zeigt schematisch eine Wellpappenanlage 1 zur Herstellung von Wellpappe 2. Die in FIG. 1 gezeigte Wellpappenanlage 1 ist eingerichtet zur Herstellung einer einwelligen, zweiseitigen Wellpappe 2.

Die Wellpappe 2 umfasst eine erste Deckbahn 3 und eine zweite Deckbahn 4 mit einer zwischenliegenden Wellenbahn 5.

Die zu Grunde liegende Erfindung ist nicht auf die in FIG. 1 gezeigte Wellpappe 2 und Wellpappenanlage (1) beschränkt, sondern ist auch für Wellpappenanlagen anwendbar, die zur Herstellung einer einseitigen und/oder mehrwelligen Wellpappe eingerichtet sind.

In dem gezeigten Beispiel wird das Material für die erste Deckbahn 3 durch eine erste Papierrolle 6 bereitgestellt und von dieser abgerollt. Das Material der Wellenbahn 5 wird durch eine zweite Papierrolle 7 bereitgestellt und von dieser abgerollt. Das Material der zweiten Deckbahn 4 eine dritte Papierrolle 8 bereitgestellt und von dieser abgerollt.

Die Wellenbahn 5 wird aus der glatten Papierbahn durch ineinandergreifende Riffelwalzen 9 erzeugt, passiert anschließend eine Leimauftragsrolle 10, und wird schließlich durch eine Anpresswalze 11 mit der ersten Deckbahn 3 verleimt.

Über mehrere Führungs- und Umlenkwalzen 14 wird die bisher einseitige Wellpappe zu einer weiteren Leimauftragsrolle 12 geführt, an welcher die zweite Seite der Wellenbahn 5 beleimt wird. Über eine weitere Anpresswalze 13 wird die zweite Seite der Wellenbahn 5 mit der von der dritten Papierrolle 8 einlaufenden zweiten Deckbahn 4 verleimt.

Die in FIG. 1 gezeigte Wellpappenanlage 1 zeigt schematisch die Herstellung von Wellpappe 2 und Komponenten einer entsprechenden Anlage, wobei die Wellpappenanlage 1 weitere, nicht gezeigte Komponenten und Einheiten aufweisen kann, wie beispielsweise eine Trocknungseinheit, eine Bedruckungseinheit zum Bedrucken der Deckbahn/en, weitere Endlospapiermagazine, usw.. Für das Verständnis der zu Grunde liegenden Erfindung ist die schematische Darstellung der FIG. 1 ausreichend.

Aus der Darstellung der FIG. 1 ergibt sich, dass die Eigenschaften des Endprodukts Wellpappe 2 von den Eigenschaften diverser Ausgangsprodukte (Papier, Leim) abhängig ist, und dass die Herstellung der Wellpappe 2 in der Wellpappenanlage 1 zugleich Randbedingungen der Wellpappenanlage 1 und der Umgebung unterliegt. Randbedingungen der Wellpappenanlage 1 sind beispielsweise Lagerspiel an Lagern und/oder Abnutzung der Führungs- und Umlenkwalzen 14, der Riffelwalzen 9, der Leimauftragsrollen 10, 12 und der Anpresswalzen 11, 13 usw.. Allgemeinen können solche, vorweg nicht abschließend aufgezählte Randbedingungen als den Maschinenzustand bzw. Anlagenzustand charakterisierend bezeichnet werden. Einstellungen der Anlage können z.B. die Bandgeschwindigkeit der Papierrollen, die Temperatur an Verleimungsrollen, der Anpressdruck der Anpresswalzen 11, 13 usw. sein.

Randbedingungen für die Wellpappenherstellung ergeben sich auch aus den Eigenschaften der Ausgangsprodukte, d.h. der Papierbahnen und des Leims usw..

Weitere Randbedingungen können sich z.B. aus Umgebungstemperatur, Luftfeuchte usw. ergeben. Auch solche Randbedingungen können die Qualität bzw. Eigenschaften der hergestellten Wellpappe 2 beeinflussen.

Mithin wird deutlich, dass die Qualität und die Eigenschaften der hergestellten bzw. herstellbaren Wellpappe von einer Vielzahl von Parametern abhängt.

Beispielhafte Parameterwerte bzw. Eigenschaften für Wellpappe bzw. für Eigenschaften der Wellpappenanlage oder für Anlagenparameter zur Verwendung in dem hierin vorgeschlagenen Verfahren sind in der nachfolgenden Tabelle aufgelistet.

| **Papierrolleneigenschaften** | **Typ** | **Einheit** |
|---|---|---|
| - Hülsenaußendurchmesser | Wert | [mm] |
| - Exakte Laufmeter auf der Rolle | Wert | [m] |
| - Splicestellen in der Rolle | Wert | [m] |
| - Produktionsdatum | Wert | [TT.MM.JJJJ] |

| **Grundeigenschaften** | | |
|---|---|---|
| - Feuchtigkeitsgehalt | MD/CD Profil | [%] |
| - Flächenbezogenemasse | MD/CD Profil | [g/m²] |
| - Dicke | MD/CD Profil | [µm] |
| - Aschegehalt | MD/CD Profil | [%] |
| - Faserausrichtung | MD/CD Profil | [%] |

| **Zugeigenschafte n** | | |
|---|---|---|
| - Bruchkraft | Wert | [N/m] |
| - Reißlänge | Wert | [m] |
| - Bruchdehnung | Wert | [%] |
| - Elasitzitätsmodul | Wert | [N/mm²] |

| **Oberflächen-/Bedruckbarkeitseigenschaften** | | |
|---|---|---|
| - *Glätte nach Bekk* | *Wert*/*CD*/*MD Profile* | *[s]* |
| - *Rauigkeit nach Bendtsen* | *Wert*/*CD*/*MD Profile* | *[ml*/*min]* |
| - *Luftdurchlässigkeit (Bendtsen*/*Gurley)* | *Wert* | *[ml*/*min]*/*[s*/*100 ml]* |

| **Wellpappenrohpapiereigenschaften** | | |
|---|---|---|
| - CMT | Wert | [N] |
| - SCT | Wert | [kN/m] |

In der Tabelle bezeichnen:
- "Typ" eine Art des entsprechenden Parameters bzw. der Eigenschaft;
- "MD" parallel zur Maschinenrichtung;
- "CD" quer zur Maschinenrichtung;
- "CMT" den Flachstauchwiderstand;
- "SCT" den Streifenstauchwiderstand.

Hier greift nun das erfindungsgemäß vorgeschlagene Verfahren ein, mit dem die (nicht abschließend aufgezählten) Randbedingungen und Prozessparameter berücksichtigt werden können, bei der Ermittlung von Anlagen- und Prozessparametern für die Herstellung einer Wellpappe 2 mit jeweils optimaler oder gewünschter Zielqualität. Beispielsweise können die in der Tabelle beispielhaft angegebenen Parameter bzw. Werte, eine Auswahl aus diesen oder andere bzw. zusätzliche Parameter bzw. Werte verwendet werden. Die Zielqualität kann vorgegeben sein, beispielsweise durch einen Kundenauftrag, in Form von die Endproduktkonfiguration der Wellpappe 2 charakterisierenden ersten Parameterwerten.

Mit dem vorgeschlagenen Verfahren ist es z.B. möglich, für die jeweilige Endproduktkonfiguration optimale Betriebsparameter für die Wellpappenanlage 1 zu ermitteln bzw. eine für die verwendeten Ausgangsmaterialien und den jeweiligen Anlagenzustand passende Endproduktkonfiguration zu finden. Letzteres ist beispielsweise möglich, wenn eine andere Endproduktkonfiguration, z.B. eines anderen Produktionsauftrags, gewählt wird falls durch Simulation für eine vorgegebene Endproduktkonfiguration kein geeigneter Prozessparameterdatensatz für gegebene Ausgangsmaterialen und Anlagenkonfigurationen gefunden werden kann.

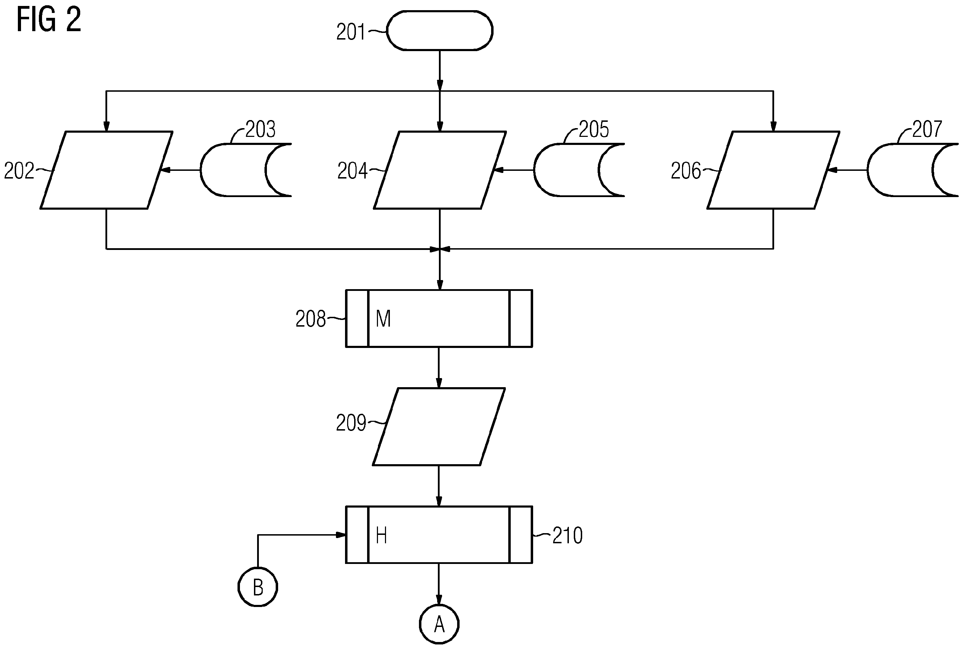

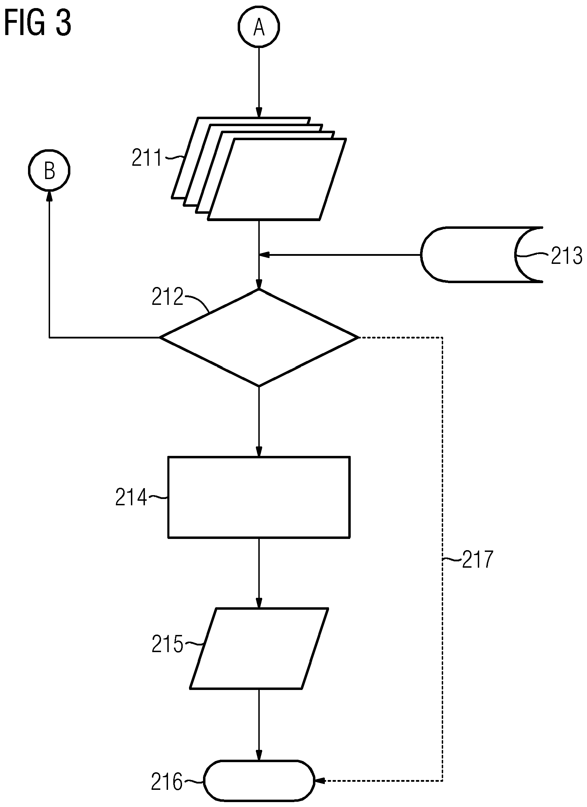

Ein beispielhaftes Ablaufdiagramm eines Verfahrens gemäß der Erfindung ist in FIG. 2 und FIG. 3 gezeigt.

Bei dem Verfahren handelt es sich um eine dynamische Prozesssteuerung für die Wellpappenanlage 1 zur Herstellung von Wellpappe. Ziel der Herstellung ist Wellpappe einer Endproduktkonfiguration aus mehreren Ausgangsprodukten. Bei der Wellpappenherstellung werden mehrere, z.B. bis zu 7, Papierbahnen, mit einem Klebstoff, z.B. einem stärkebasierten Klebstoff verklebt. Die Papierbahnen, bzw. das Papier, und der Klebstoff bilden Ausgangsprodukte für die Wellpappe.

Nach Initiierung 201 des Verfahrens erfolgt in einem ersten Verfahrensschritt eine Bereitstellung 202 von ersten Parameterwerten 203. Die ersten Parameterwerte 203 definieren bzw. charakterisieren die Solleigenschaften der Wellpappe, d.h. eine Endproduktkonfiguration. Solleigenschaften betreffen z.B. Struktur, Oberflächenqualität, Festigkeit, Planlage, Verleimung, Faltbarkeit, Verarbeitbarkeit, Energieeffizienz der Herstellung, Verschnittmenge usw.. Die ersten Parameterwerte können jeweils mit zugeordneten Toleranzen verknüpft sein, die die zulässigen Schwankungsbreiten der ersten Parameterwerte festlegen. Ziel des Verfahren ist es, Betriebs- und Prozessparameter für die Wellpappenanlage zu ermitteln, mit welchen für gegebene Ausgangsprodukte und eine gegebene Anlagenkonfiguration Wellpappe gemäß der Endproduktkonfiguration hergestellt werden kann.

Das Bereitstellen der ersten Parameterwerte kann beispielsweise über eine Eingabeschnittstelle, in Form eines elektronischen Datensatzes oder in Form eines auf einer Datenbank oder einem Datenspeicher gespeicherten Datensatzes bereitgestellt werden.

Einen weiteren Verfahrensschritt bildet das Erfassen 204 bzw. Bereitstellen von mehreren zweiten Parameterwerten 205. Die zweiten Parameterwerte 205 definieren bzw. charakterisieren die Ist-Eigenschaften der Ausgangsprodukte, d.h. eine Ausgangsproduktkonfiguration der Ausgangsprodukte oder Ausgangsmaterialien. Die zweiten Parameterwerte 205 bzw. die Ist-Eigenschaften betreffen z.B. Papierqualität, Papierfestigkeit, flächenbezogene Masse, Faserorientierung, Feuchtigkeit, Temperierung, Leimart, Leimqualität usw.. Die Erfassung 204 der zweiten Parameterwerte 205 kann z.B. eine Messung mittels Sensoren und/oder eine Bereitstellung als elektronische Daten, z.B. eines Datensatzes, eine Eingabe über eine Benutzerschnittstelle usw. umfassen. Entsprechende Daten können z.B. auf einem elektronischen Datenspeicher bzw. einer Datenbank bereitgestellt werden.

Ein weiterer Verfahrensschritt umfasst das Erfassen 206 von mehreren, den Anlagenzustand der Wellpappenanlage 1 charakterisierenden Anlagenparameterwerte 207. Das Erfassen 206 kann z.B. eine Messung von Anlagenparametern und/oder eine Eingabe über eine Eingabeschnittstelle und/oder ein Einlesen in Form von elektronischen Daten, z.B. aus einer Datenbank oder einem Datenspeicher umfassen. Die Anlagenparameterwerte 207 charakterisieren bzw. beschreiben den Ist(-betriebs)zustand der Wellpappenanlage 1, insbesondere von Untereinheiten der Wellpappenanlage 1. Als Anlagenparameterwerte 207 kommen Größen wie Verschleiß, Umweltbedingungen, Luftfeuchte und Umgebungstemperatur usw. in Frage. Insbesondere und allgemein also Betriebsparameter, Einstellungen, Zustandsdaten usw., welche einen Einfluss auf die hergestellte Wellpappe haben bzw. haben können. Ein Anlagenparameterwert kann insbesondere dann verwendet werden, wenn und insoweit ein Einfluss des Parameterwerts auf die Qualität und/oder Eigenschaften des Endprodukts Wellpappe bekannt ist, und ein Zusammenhang zwischen dem Parameter und/oder Änderungen desselben und der Qualität/Eigenschaften der Wellpappe der Datenverarbeitungstechnisch beschreibbar ist. Beschreibbar kann ein solcher Zusammenhang insbesondere dann angesehen werden, wenn ein Einfluss des Parameters auf das Endprodukt entweder durch empirische Daten (z.B. in Form einer Datentabelle) und/oder funktional mathematisch darstellbar ist.

Die bereitgestellten bzw. erfassten Daten zum Ausgangsprodukt und zur Wellpappenanlage und deren Betriebsbedingungen liefern jeweils vorgegebene Randbedingungen, welche sich auf die Produktion der Wellpappe auswirken/können.

Die Reihenfolge der Bereitstellung bzw. der Erfassung der Daten 203, 205 und 207 ist im Wesentlichen beliebig, und kann insbesondere auch zumindest teilweise parallel erfolgen.

Sind alle Daten 203, 205, 207 vorhanden, folgt in einem weiteren Verfahrensschritt ein Ermitteln 208 eines Prozessparameterdatensatzes 209 basierend auf einem mathematischen Modell M. Das mathematische Modell M ist so eingerichtet, dass dieses aus den Daten 203, 205 und 207 als Eingangsdaten Prozessparameter des Prozessparameterdatensatzes 209 ermittelt. Das mathematische Modell M beschreibt mithin eine Abbildung der Eingangsdaten auf mehrere Prozessbeschränkungen für Prozessparameter, die als solche variiert werden können, d.h. variable Prozessparameter darstellen. Mit anderen Worten liefert das mathematische Modell M für die jeweils gegebenen Randbedingungen Prozessparameter zum Betrieb der Wellpappenanlage 1.

In einem darauffolgenden Verfahrensschritt erfolgt eine Simulation 210 eines oder mehrerer das Endprodukt, d.h. die Wellpappe, charakterisierender Qualitätsabbilder 211, wobei als Grundlage für die Simulation 210 die Prozessparameter des Prozessparametersatzes 209 bilden. Die Simulation 210 beruht auf einem mathematischen Herstellungsalgorithmus H, der den Betrieb der Wellpappenanlage 1 bei vorgegebenen Prozessparametern beschreibt.

Mithin kann mit den Schritten 208 bis 210 die Herstellung der Wellpappe 2 basierend auf realen Betriebsparametern simuliert werden. Das Ergebnis der Simulation bildet das/die Qualitätsabbild/er 211.

Mehrere Qualitätsabbilder 211 können beispielsweise dadurch erhalten werden, dass die variablen, d.h. variierbaren, Prozessparameter bzw. Prozess- oder Maschineneinstellungen, im Rahmen der möglichen Prozessbeschränkungen variiert werden, und für jede der Variationen ein Qualitätsabbild 211 ermittelt wird.

Nach Ermittlung des oder der simulierten Qualitätsabbilder 211 erfolgt ein Vergleich 212 dieser Qualitätsabbilder 211 mit einem z.B. auf einem Datenspeicher hinterlegten, digitalen Zielabbild 213. Das digitale Zielabbild 213 korrespondiert und beschreibt die gewünschte Endproduktkonfiguration, insbesondere Qualität, Eigenschaften usw..

Ergibt sich aus dem Vergleich 212, dass sich das oder die simulierten Qualitätsabbilder 211 mehr als eine vorgegebene Schwellwertqualität vom Zielabbild 213 unterscheiden, so springt das Verfahren zurück zum Simulationsschritt 210, wie durch Referenz B in Figuren 2 und 3 gezeigt ist. Bei der wiederholten Simulation 210 erden die Prozessparameter weiter verändert, jedoch innerhalb der zulässigen Prozessbeschränkungen, und es werden weitere Qualitätsabbilder 211 simuliert und mit dem Zielabbild 213 verglichen. Diese Schritte können iterativ ausgeführt werden, bis das oder eines der Qualitätsabbilder 211 im Rahmen der Schwellwertqualität des Zielabbilds 213 liegt, oder bis ein Abbruchkriterium erreicht ist. Der Verfahrensverlauf bei Erreichen des Abbruchkriteriums ist, in der FIG. 3 durch einen strichlinierten Pfeil 217 angedeutet. Das Abbruchkriterium kann z.B. eine maximale Anzahl an wiederholt ausgeführten Iterationen oder an simulierten Qualitätsabbildern 211 sein. Das Abbruchkriterium kann z.B. deswegen vorgesehen sein, da grundsätzlich nicht in allen Fällen sichergestellt werden kann, dass für jeweils vorliegende Istwerte für Ausgangsprodukt und Anlagenzustand der Wellpappanlage mit Sicherheit eine Wellpappe herstellbar ist, welche der Endproduktkonfiguration entspricht. Bei einem Abbruch des Verfahrens können dann eine andere Endproduktkonfiguration, ein Austausch der Ausgangsprodukte, und/oder z.B. eine Wartung der Wellpappanlage in Betracht gezogen werden. Reicht die Qualität der konkret vorhandenen Ausgangsprodukte z.B. nicht aus zur Herstellung einer Wellpappe mit hohen Qualitätsanforderungen, so kann in Betracht gezogen werden, Wellpappe herzustellen, die weniger hohe Qualitätsanforderungen erfüllen muss, wozu z.B. eine andere Endproduktkonfiguration herangezogen werden kann, und das Verfahren basierend darauf, ggf. unter Verwendung anderer Modelle, wiederholt wird.

Ergibt sich aus dem Vergleich 212, dass das oder eines der Qualitätsabbilder 211 im Rahmen der Schwellwertqualität des Zielabbilds 213 liegt, so folgt in einem weiteren Verfahrensschritt eine Ermittlung 214 der bei der Simulation 210 verwendeten Prozessparameter und ein Bereitstellen der ermittelten Prozessparameter als ein Prozessparameterdatensatz 215 zum Betrieb der Wellpappenanlage 1 zur Herstellung der Wellpappe entsprechend der Zielqualität.

Mit Bereitstellung des Prozessparameterdatensatzes 215, umfassend insbesondere Maschinen- und Anlageneinstellungen usw., ist das Ende 216 des Verfahrens für die jeweils zu Grunde liegende Endproduktkonfiguration 203 und das entsprechende digitale Zielabbild 213, die zueinander korrespondieren, erreicht.

Der Prozessparameterdatensatz 215 kann z.B. auf einem elektronischen Speicher 16, z.B. einer Datenbank, abgelegt werden. Soll die Produktion der Wellpappe 2 gemäß der Endproduktkonfiguration unmittelbar erfolgen, so kann der Prozessparameterdatensatz 215 in eine Rechnereinheit 15 bzw. eine Steuereinheit eingelesen werden, die zum Betrieb und zur Steuerung/Regelung der Wellpappenmaschine 1 für die Herstellung der Wellpappe 2 vorgesehen und eingerichtet ist.

Bei der Herstellung ist es möglich, dass ein Ist-Qualitätsabbild der jeweils hergestellten Wellpappe 2 mit dem digitalen Zielabbild 213, insbesondere kontinuierlich, verglichen wird. Das Ist-Qualitätsabbild kann beispielswiese basierend auf Sensordaten und/oder Bilddaten der hergestellten Wellpappe 2 ermittelt werden. Weicht das jeweilige Ist-Qualitätsabbild (z.B. systematisch) mehr als die Schwellwertqualität ab, oder liegen die Abweichungen nahe an der Schwellwertqualität, so kann das Verfahren erneut ausgeführt werden. Bei der erneuten Ausführung des Verfahrens können dann jeweils aktuelle Istwerte für die Ausgangsprodukte und den Zustand bzw. die Gegebenheiten der Wellpappenmaschine 1 als Eingangsdaten verwendet werden. Basierend darauf kann mit dem Verfahren versucht werden, einen neuen Prozessparameterdatensatz 215 zu ermitteln, der eine Herstellung der Wellpappe 2 in Zielqualität ermöglicht. Das bedeutet, dass das Verfahren während der Herstellung von Wellpappe 2 einer Zielqualität wiederholt angewandt werden kann, wobei die Prozessparameter entsprechend dynamisch angepasst werden können.

Die beispielhaften Ausführungen zeigen, dass das hierin vorgeschlagene Verfahren die eingangs genannten Probleme löst. Insbesondere ist es durch oder bei Verwendung des Verfahrens bei der Herstellung von Wellpappe möglich, die Effizienz der Herstellung zu steigern. Ferner kann der Ausschuss verringert werden, da durch die Simulation im Wesentlichen stets optimale Betriebsparameter eingestellt werden können. Auch ermöglicht das Verfahren einen zeitsparenden Betrieb, denn durch die Simulation kann die Rüstzeit für die Herstellung von Wellpappe einer gewünschten Zielqualität verringert werden.

### Bezugszeichenliste

- 1: Wellpappenanlage
- 2: Wellpappe
- 3: erste Deckbahn
- 4: zweite Deckbahn
- 5: Wellenbahn
- 6: erste Papierrolle
- 7: zweite Papierrolle
- 8: dritte Papierrolle
- 9: Riffelwalzen
- 10: Leimauftragsrolle
- 11: Anpresswalze
- 12: weitere Leimauftragsrolle
- 13: weitere Anpresswalze
- 14: Führung- und Umlenkwalze
- 15: Rechnereinheit
- 16: elektronischer Speicher

## Patentansprüche

1. Verfahren zur dynamischen Prozesssteuerung einer Wellpappenanlage (1) zur Herstellung von Wellpappe (2) einer Endproduktkonfiguration aus mehreren Ausgangsprodukten, insbesondere Papier (3, 4, 5) und Klebstoff, umfassend
a) Bereitstellen (202) mehrerer die Endproduktkonfiguration charakterisierender erster Parameterwerte (203);
b) Erfassen (205) von mehreren, eine Ausgangsproduktkonfiguration der Ausgangsprodukte (3, 4, 5) charakterisierenden zweiten Parameterwerten (205),
c) Erfassen (206) von mehreren, den Anlagenzustand der Wellpappenanlage (1) charakterisierenden Anlagenparameterwerte (207),
d) Ermitteln (208) eines Prozessparameterdatensatzes (209) basierend auf einem mathematischen Modell (M), wobei die ersten und zweiten Parameterwerte (203, 205) und die Anlagenparameterwerte (207) als Eingangsdaten für das mathematische Modell (M) verwendet werden, und das mathematische Modell (M) eine Abbildung der Eingangsdaten auf mehrere Prozessbeschränkungen für variable Prozessparameter der Wellpappenanlage (1) beschreibt;
e) Simulieren (210) eines oder mehrerer, das Endprodukt charakterisierender Qualitätsabbilder (211) basierend auf einem, den Herstellungsprozess der Wellpappenanlage (1) beschreibenden mathematischen Herstellungsalgorithmus (H), wobei als Eingangsdaten für den Herstellungsalgorithmus (H) innerhalb der Prozessbeschränkungen gelegene, Prozessparameter des Prozessparameterdatensatzes (209) verwendet werden;
f) Vergleichen (212) des simulierten Qualitätsabbilds (211) mit einem hinterlegten digitalen Zielabbild (213);
g) Wiederholden der Simulation (210) unter Variation der Prozessparameter innerhalb der Prozessbeschränkungen, falls sich bei dem Vergleichen (212) gemäß Schritt f) herausstellt, dass sich das simulierte Qualitätsabbild (211) mehr als eine vorgegebene Schwellwertqualität vom Zielabbild (213) unterscheidet; und
h) Ermitteln (214) der bei der Simulation (210) verwendeten Prozessparameter, falls sich beim Vergleichen (212) gemäß Schritt f) herausstellt, dass das simulierte Qualitätsabbild (211) weniger als die vorgegebene Schwellwertqualität vom Zielabbild (213) abweicht, und Bereitstellen der ermittelten Prozessparameter als ein Prozessparameterdatensatz (215) zum Betrieb der Wellpappenanlage (1) bei der Herstellung der Wellpappe (2).

2. Verfahren nach Anspruch 1, wobei das mathematische Modell (M) und/oder der Herstellungsalgorithmus (H) auf Methoden der Mustererkennung, auf Methoden der Fuzzy-Logik und/oder auf Methoden der neuronalen Netzwerke beruht.

3. Verfahren nach Anspruch 1 oder 2, wobei mehrere mathematische Methoden (M) und/oder Herstellungsalgorithmen (H) bereitgestellt werden, und in Abhängigkeit der Endproduktkonfiguration ausgewählt werden oder auswählbar sind, insbesondere durch einen Benutzer.

4. Verfahren nach einem der Ansprüche 1 bis 3, wobei die Schritte a) bis h) während des Betriebs der Wellpappenanlage (1) bei der Herstellung von Wellpappe (2) wiederholt ausgeführt werden, wobei die zum Betrieb der Wellpappenanlage (1) verwendeten Prozessparameter basierend auf der wiederholten Ausführung dynamisch angepasst werden.

5. Verfahren nach einem der Ansprüche 1 bis 4, wobei die ersten Parameterwerte (203), die zweiten Parameterwerte (205) und/oder die Anlagenparameterwerte (207) durch Sensoren erfasst, aus einer korrespondierenden Datenbank (16) ausgelesen werden und/oder von einem Benutzer über eine Benutzerschnittstelle abgefragt werden.

6. Verfahren nach einem der Ansprüche 1 bis 5, wobei
- die ersten Parameterwerte (203) ausgewählt sind aus der Gruppe umfassend: Struktur, Oberflächenqualität, Festigkeit, Planlage, Verleimung, Faltbarkeit, Verarbeitbarkeit, Energieeffizienz der Herstellung, Verschnittmenge; und/oder
- die zweiten Parameterwerte (205) ausgewählt sind aus der Gruppe umfassend: Papierqualität, Papierfestigkeit, flächenbezogene Masse, Faserorientierung, Feuchtigkeit, Temperierung, Leimart, und Leimqualität; und/oder
- die Anlagenparameterwerte (207) ausgewählt sind aus der Gruppe umfassend: Verschleiß, Umweltbedingungen, Luftfeuchte und Umgebungstemperatur; und/oder
- die Prozessparameter ausgewählt sind aus der Gruppe umfassend: Temperatur, Befeuchtung, Bahnpassungen, Anpressdrücke, Dampfdrücke.

7. Verfahren nach einem der Ansprüche 1 bis 6, wobei das Vergleichen (212) gemäß Schritt f) ein Segmentieren der Qualitätsabbilder (211) und ein Vergleichen entsprechender Segmente der Qualitätsabbilder (211) mit dem Zielabbild (213) umfasst, wobei zur Ermittlung eines Vergleichsergebnisses für jeweilige Segmente erhaltene Einzelvergleiche vorzugsweise unterschiedlich gewichtet werden.

8. Verfahren nach einem der Ansprüche 1 bis 7, wobei die ersten Parameterwerte (203), die zweiten Parameterwerte (205), die Anlagenparameterwerte (207) und/oder die Prozessparameter jeweils klassifiziert werden/sind, und unter Verwendung eines Mustererkennungsalgorithmus jeweils vorgegebenen Klassen von Parameterwerten, Anlagenparameterwerten bzw. Prozessparametern als Eingangsdaten für Schritt d) und/oder e) zugeordnet werden.

9. Rechnereinheit (15) umfassend zumindest einen Prozessor und zumindest einen Speicher mit darauf gespeicherten Instruktionen, die bei Ausführung durch den Prozessor ein Verfahren nach einem der Ansprüche 1 bis 8 bewirken.

10. Rechnereinheit (15) nach Anspruch 9, wobei die Rechnereinheit (15) des Weiteren dazu eingerichtet ist, Anlagensteuerbefehle aus den ermittelten Prozessparametern zu erzeugen, und wobei die Rechnereinheit (15) ferner eine Steuerung (15) umfasst, die dazu eingerichtet ist, die Wellpappenanlage (1) bei der Herstellung der Wellpappe (2) entsprechend den Anlagensteuerbefehlen zu steuern.

11. Computerprogrammprodukt umfassend Instruktionen, die bei Ausführung durch eine Rechnereinheit (15) oder eine Steuerung (15) ein Verfahren nach einem der Ansprüche 1 bis 8 bewirken.

12. Wellpappenanlage (1) mit einer Rechnereinheit (15), welche zur Herstellung von Wellpappe (1) gemäß einem Verfahren zur dynamischen Prozesssteuerung nach einem der Ansprüche 1 bis 8 eingerichtet sind.

13. Wellpappenanlage (1) nach Anspruch 12, umfassend eine Eingabeeinheit oder Eingabeschnittstelle zur Eingabe und/oder zur Auswahl und/oder zum Einlesen der ersten Parameterwerte (203), der zweiten Parameterwerte (205), der Anlagenparameterwerte (207) und/oder der variablen Prozessparameter.

14. Wellpappenanlage (1) nach Anspruch 12 oder 13, wobei die ersten Parameterwerte (203), die zweiten Parameterwerte (204), die Anlagenparameterwerte (207) und/oder die variablen Prozessparameter in einer oder mehreren der Wellpappenanlage (1) zugeordneten Datenbanken (16) abgelegt sind, und sind für die Durchführung des Verfahrens durch einen Benutzer und/oder durch die Rechnereinheit (15) abrufbar und/oder auswählbar.

15. Wellpappenanlage (1) nach einem der Ansprüche 12 bis 14, umfassend einen in der Rechnereinheit (1) implementierten Klassifikator zur Klassifikation der ersten Parameterwerte (203), der zweiten Parameterwerte (205), der Anlagenparameterwerde (207) und/oder der Prozessparameter, zur Zuordnung der klassifizierten ersten Parameterwerte, der klassifizierten zweiten Parameterwerte, der klassifizierten Anlagenparameterwerde und/oder der klassifizierten (variablen) Prozessparameter, zu vorgegebenen ersten Parametersätzen, zweiten Parametersätzen, Anlagenparametersätzen bzw. Prozessparameterwertesätzen, wobei die Rechnereinheit (1) dazu eingerichtet ist, die zugeordneten ersten Parametersätze, zweiten Parametersätze, Anlagenparametersätze bzw. Prozessparameterwertesätze als Eingangsdaten bei der Durchführung der Schritte d) und/oder e) zu verwenden.

16. Wellpappenanlage (1) nach einem der Ansprüche 12 bis 15, umfassend eine in der Rechnereinheit (15) implementierte Simulationseinheit eingerichtet zur Durchführung der Simulation nach Schritt e).

17. Wellpappenanlage (1) nach einem der Ansprüche 12 bis 16, umfassend eine in der Rechnereinheit (15) implementierte Vergleichs- und Auswerteeinheit eingerichtet zur Durchführung des Vergleichs nach Schritt f) und zur Auswertung des Vergleichsergebnisses.
